# EUROPEAN PATENT SPECIFICATION

(11) **EP 2 057 242 B1**
(45) Date of publication and mention of the grant of the patent: **13.05.2020**
(21) Application number: 07784734.1
(22) Date of filing: 03.08.2007
(51) Int. Cl.: B01J 19/16, A01N 25/30

(54) **PROTECTIVE SURFACE FILM FOR A LIQUID**
SCHÜTZENDER OBERFLÄCHENFILM FÜR EINE FLÜSSIGKEIT
FILM DE SURFACE PROTECTEUR POUR LIQUIDE

(30) Priority: 04.08.2006 AU 2006904227 P
(43) Date of publication of application: 13.05.2009
(73) Proprietor: Aquatain Technologies Pty Ltd, Noble Park VIC 3174 (AU)
(72) Inventor: STRACHAN, Graham, George, Berwick, Victoria 3806 (AU)
(74) Representative: Ganguillet, Cyril
(86) International application number: PCT/AU2007/001094
(87) International publication number: WO 2008/014566

(56) References cited:
- WO-A1-2005/063198
- RU-C1- 2 109 028
- US-A- 4 160 033
- US-A- 4 171 267
- US-A- 4 235 743
- US-A- 4 402 908
- US-A- 4 797 273
- US-A- 5 653 991
- US-A- 5 658 851
- US-A- 5 925 607
- US-A1- 2001 039 321
- PATENT ABSTRACTS OF JAPAN & JP 56 118478 A (MIYATA KOGYO KK) 17 September 1981

## Description

### Field of the invention

The present invention relates to a protective surface film for a liquid and in particular stable protective surface films used to cover a large body of water to prevent evaporation.

### Background of the invention

The need to conserve scarce water supplies is a major environmental issue worldwide. As a result, an increasing level of attention is being directed to various water-saving measures. In particular, the loss of water through evaporation is one area of major concern. Measures to restrict evaporation have included the use of underground drip irrigation, the replacement of open irrigation channels with pipelines and restricting the application of water to times at which evaporation is kept to a minimum.

Several products have also been developed to reduce the evaporation from water bodies by covering the surface of the water, such as shade structures, plastic films and other floating membranes. However, the widespread adoption of such products has been inhibited by the substantial initial capital costs.

Chemical monolayers have also been proposed. These are powders which are dispersed on the water. They commonly incorporate an alcohol (such as cetyl or stearyl alcohol), which is known to help prevent evaporation by forming a barrier on the surface. An additive such as hydrated lime may also be blended with the alcohol to assist the alcohol to self-spread by creating charged particles.

The fundamental disadvantage with alcohol based monolayers is that the film typically degrades within a couple of days and therefore must be regularly re-applied to remain an effective barrier to water loss. In addition, trials have shown that alcohol layers are only partially successful in reducing evaporation with evaporation reductions of less than 30% reported. US-A-4 797 273 discloses a defoamer and a silicone polymer used for avoiding water evaporation.

Therefore there is a need for a cost effective composition for application to a liquid as a protective surface film which reduces the evaporation loss of the liquid for an extended period of time.

### Summary of the invention

Silicones, or polysiloxanes, are inorganic-organic polymers with the chemical formula [R₂SiO]ₙ, where R = organic groups such as methyl, ethyl, and phenyl. These materials consist of an inorganic silicon-oxygen backbone (...-Si-0-Si-0-Si-0-...) with organic side groups attached to the silicon atoms, which are four-coordinate. In some cases organic side groups can be used to link two or more of these -Si-0- backbones together. By varying the -Si-0- chain lengths, side groups, and crosslinking, silicones can be synthesized with a wide variety of properties and compositions. They can vary in consistency from liquid to gel to rubber to hard plastic. The most common type is linear polydimethylsiloxane or PDMS. These polymers are known to be hydrophobic (water repellent) and possess a very silky feel which has led to their use in personal care products such as cosmetics, deodorants and shaving gels.

The applicant has found that silicon based polymers (including silicone base polymers) have the potential to be employed as a large scale liquid surface protector, such as unenclosed water storage facilities (eg. reservoirs or dams).

However, the main disadvantage of large silicone polymers is the inability to adequately spread across a large body of water and the slow rate at which they spread across water.

While polysiloxanes have limited self spreading ability on water, other compounds are added to the silicone polymer composition to aid in the uniform spreading of the polymer over the liquid surface. A higher cross linking in the polysilixane leads to a thicker polymer surface film which would be expected to provide a better heat and mass transfer barrier at the liquid/gas interface.

In an aspect, the present invention provides a method for protecting the surface of a liquid comprising the step of:
applying a film forming composition to the liquid surface at a rate of 0.3 to 90 g/m², wherein the film forming composition having a viscosity from 5·10⁻⁵ to 10⁻³ m²s⁻¹ (50 to 1000 centistokes) at the ambient temperature comprises 5 to 95 wt% silicone polymer being a polyorganosiloxane being a polymer of dimethylsiloxane; 5 to 75 wt% of carrier material, wherein the carrier material is mineral oil and/or vegetable oil; and 0.2 to 20 wt% surfactant, the film forming a substantially continuous protective film across the surface of the liquid.

In one embodiment, the composition is a liquid composition.

In another embodiment, the surfactant is present in an amount of 0.5 to 20 wt%.

Suitably, the surfactant and the carrier material are mixed prior to forming the film forming composition with the silicone polymer.

In a certain embodiment, the continuous protective film protects the liquid/gas interface from insect infestations.

In one embodiment, the composition is applied to the surface at a rate of between 0.3 to 50 g/m².

Also disclosed is a composition for the protection of a body of water comprising 5-95 wt% silicone polymer being a polyorganosiloxane being a polymer of dimethylsiloxane;5 to 75 wt% carrier material, wherein the carrier material is mineral oil and/or vegetable oil ; and 0.2 to 20 wt% surfactant; said composition having a viscosity from 5·10⁻⁵ to 10⁻³ m²s⁻¹ (50 to 1000 centistokes) at the ambient temperature.

Further features and advantages of the invention will become apparent to the skilled person from the description of the preferred embodiments given below.

### Detailed description of the embodiments

The applicant has found that the addition of a surface active agent or surfactant consisting of a bipolar molecule greatly assists not only the spreadability of the silicone polymer but also the rate at which the siloxane spreads across the water. To achieve a high level and rate of spread across a body of water, it is ideal if the surfactant is added up to quantities which allow a miscible solution with the silicone polymer to be formed at ambient temperature. Preferably the surfactant is present in an amount of 0.2-20 wt%, more preferably 0.5-1 0 wt% and most preferably 0.5-5 wt%.

Preferably the composition also comprises greater than 0 wt% of a carrier material. In order to enhance the mixing of the silicone polymer and surfactant, it is preferable that the surfactant is mixed with a compatible carrier prior to mixing with the silicone pojymer. The surfactant may be present in the carrier blend up to 20 wt% but more typically 5-20 wt% and preferably about 10 wt%. The carrier material is preferably hydrophobic and is preferably selected from the group consisting of a mineral oil, a vegetable oil or mixtures thereof. As well as acting as a carrier for the surfactant, the oil (mineral or vegetable) may also be separately mixed with the silicone to reduce the cost of the composition. The addition of the oil also enhances the spreadability of the silicone polymer on the water. The total mineral or vegetable oil content is preferably in the range of 5-90 wt% and more preferably 5-75 wt%.

Within the context of the invention, a vegetable oil is a product of vegetable origin obtained by extracting the oil from seeds or fruits. Vegetable oils are liquid at ambient temperature and includes oils of canola, sunflower, safflower mustard, cotton and peanut, Vegetable oils also include palm oil, linseed oil, tung oil and caster oil.

A mineral oil is a byproduct of the distillation of petroleum to produce gasoline. It is available in light or heavy grades. To be useful in the invention the viscosity of the mineral oil should be within the referred viscosity ranges specified above. Various products are described commercially as mineral oil which includes white oil and paraffin oil and the person skilled in the art is familiar with this term of art.

The silicone based polymer film may be chemically modified to enhance adhesion of the film onto the filler material. In extreme environments, UV additives or other polymer stabilisers may also be added to the composition.

The silicone polymer for use in the present invention is preferably a polyorganosiloxane, such as poly(dimethyl siloxane). Depending on the number of repeat units in the polyorganosilicone chain and the degree of cross linking between the polymer chains, the physical state of a polymer at a given temperature can be changed. By progressively increasing the cross linking of the polyorganosilicone such as polydimethyl silicone, solid elastomers and resins can be formed. The silicon polymer for use in the present invention is preferably in a liquid form, with the product dispersing into a film upon contact with the liquid surface. The silicone polymer fluids are typically straight chain polymers of dimethylsiloxane. For ease of application the fluids preferably have a viscosity less than 1000 centistokes and more preferably between 50 and 1000 centistokes at the atmospheric temperature of application which is considered ambient temperature.

The dimethyl siloxane is preferably of a type similar to Dow Corning "200 Fluid". The polysiloxane is preferably the majority component in the composition ie greater than 50%

To assist in the delivery of the composition, the above composition may be combined with an inert particulate material. The film forming composition may be absorbed onto the particulate material to form a stable bulk material for ease of handling and storage. Examples of suitable particulate material include calcium carbonate, talc, and fine coal particulates, fly ash, or censpheres (a lightweight, inert, hollow sphere filled with inert air or gas, which may be derived from fly ash). This list is not exhaustive and other fillers may be added, with their selection based on cost, density, hydrophobicity, inertness to the film forming composition, their ability to coat and adhere to the composition and ability to release the composition on contact with water. The filler material may also possess other desirable functional properties. For instance, the surface film may also act as an insect suppressant and in particularly a mosquito suppressant. The dual functionality of the protective surface film addressing 5 both water conservation and public health needs. The suppressant may be in a liquid form or may be part of or bound to the filler material. For example, sulphur and sulphur containing material are known to repel mosquitoes.

The present invention provides a method for protecting the surface of a liquid comprising the steps of:
applying a film forming composition comprising a silicone based polymer to the liquid surface at a rate of 0.3 to 90 gm/m2, wherein the film forming composition forms a substantially continuous protective film across the surface of the liquid.

The film forming composition preferably further comprises a surfactant material in the range of greater than zero wt% to 20 wt%. The surfactant maybe initially within a carrier material which is a mineral or vegetable oil prior to mixing with the silicone based polymer. The mineral or vegetable oil which may be added with the surfactant as well as separately is preferably present in the composition in the range of greater than zero to 90 wt%.

The liquid surface area is preferably large, such as water storage facilities (eg. reservoirs or dams). The composition may be applied from the periphery of the liquid body or aerially, eg. via an airplane, such as a crop duster.

The continuous silicone polymer based film preferably inhibits or controls the rate of heat and mass transfer across liquidlgas interface, such that evaporation of the liquid is reduced. The continuous silicone based polymer film may contain active ingredients which protect the liquid/gas interface from insect infestations.

For liquid compositions, the silicone based polymer composition is preferably applied at an application rate of about 0.3 to 50 grams per square meter, more preferably about 0.3 to 30 grams per square meter, and even more preferably 0.3 to 10 grams per square meter, and most preferably about 0.3 to 1.0 grams per square meter.

The relatively low application rates and high stability of the silicone based polymer compositions, compared to alcohol based films, enables a protective surface film to be applied in a cost effective manner. Further, as the composition is substantially inorganic, the price of the composition will remain relatively stable in comparison to petroleum based films.

It will be appreciated that the protective surface film may be applied to a range of liquid surfaces to inhibit or control mass and heat transfer from liquid/gas interface or form a physical andlor chemical barrier against the gaseous environment. For example, the silicone based polymer composition may be applied to an oxidizable liquid to prevent or reduce oxidation.

In particular, composition including silicone base polymers possess a number of desirable properties, at least some of which are unexpected, including:
a) it is easy to apply (in liquid form), either from the banks of the water storage, by boat or by aerial spraying;
b) it floats naturally without the need for added buoyancy (the specific gravity is less than 1.0);
c) it tends to self-spread on the surface - even against significant wave pressure, such that is experienced on exposed bodies of water;
d) it has a high mechanical strength and even if the film is broken, it readily reforms, thereby maintaining the integrity and functionality of the film;
e) it is resistant to high temperatures, oxidation and ultra violet breakdown;
f) it is transparent and has a high oxygen permeability and therefore has minimal impact upon sub-surface aquatic life.
g) it is classified as non-hazardous and can therefore be safely applied to drinking water bodies; and
h) it remains effective for at least several weeks.

### Examples

In developing the invention, the applicant set out to develop a film forming composition having a number of desirable features. The composition preferably has sufficient spreadability to enable a flexible monolayer to be formed over a large water body. The monolayer preferably should remain flexible for an extended period of time and the monolayer should reduce evaporation. Ideally the mono layer can also be used to control mosquitoes or odours Additionally there should be inert, resistant to uv radiation and oxidation, and have no deleterious impacts on the environment.

In order to evaluate the spreadability of the various liquids, the applicant developed the following simple test. A rectangular tank 500 mm x 200 mm was part-filled with water, and fine ground pepper was sprinkled on to the surface. The pepper covered the surface uniformly. When a drop of each formulation was applied by pipette to one end of the tank, the time taken for the pepper film to be compressed to the other end was measured.

Initially, the applicant tested a number of mineral oils, vegetable oils and commercially available siloxanes to determine their suitability for use as a film forming layer. As shown in table 1, the applicant found that, by themselves, silicone polymers, mineral oils and vegetable, oils do not spread spontaneously across the water surface.

**TABLE 1**

| PRODUCT GROUP | TYPICAL PRODUCT | SELF-SPREADING |
|---|---|---|
| Vegetable oils | Olive oil, peanut oil, canola oil, sunflower oil, sesame oil, mustard seed oil, palm oil, cottonseed oil | No |
| Mineral oils | Various products described as mineral oil, white oil or paraffin oil | No |
| Silicones (Dow Corning 200 Fluids) | Various viscosities ranging from 50 cts to 10,000 cts | No |

In order to improve the spreadability of the above compounds, the applicant trialled the use of surfactants initially blended with a silicone or mineral or vegetable oil. Such compounds are marketed under the class of compounds know as defoamers which are also marketed as antifoamers.

The surfactants were first tested to determine their suitability as a film forming layer and the results of tests are shown in Table 2.

The applicant performed a number of spreadability tests on 18 commercially available defoamers which were a blend of surfactant and a carrier material as described above. When these compounds were then blended with a mineral oil or a vegetable oil, a slow spread was observed with the conclusion that a surfactantloil blend was not suitable for use as a film forming composition for water surfaces, other than a very small dam.

Samples of silicone polymer (PDMS) commercially available as "200 Fluid" by Dow Corning was tested with mineral oil and canola oil using the spreadability test regime outlined above with the time taken to move the pepper to one edge of the tank timed. Oils and silicones were tested in combination and also in conjunction with an oil/surfactant defoamer marketed as SIL D850 marketed by Mera Chemicals containing about 10 wt% surfactant in a mineral oil carrier. The surfactant is sodium di (2-ethyl 5 hexyl) sulphosuccinate. and the results are shown in Table 2.

**TABLE 2**

| Formation weight percentages | | | | | Time to spread |
|---|---|---|---|---|---|
| Silicone 200 Fluid (50 cts) | Mineral oil | Vegetable oil (Canola) | Defoamer (Sil D850) | TOTAL | Seconds |
| 100 | | | | 100 | 500+ |
| 95 | | | 5 | 100 | 6 |
| 90 | | | 10 | 100 | 5 |
| 70 | | | 30 | 100 | 5 |
| | 100 | | | 100 | 500+ |
| | 95 | | 5 | 100 | 22 |
| | 90 | | 5 | 100 | 9 |
| | | 100 | | 100 | 500+ |
| | | 95 | 5 | | 25 |
| 5 | | 90 | 5 | 100 | 11 |
| | | | 100 | 100 | 200+ |

When a silicone polymer namely PDMS was added to the oillsurfactant blend, a much more dramatic spread was achieved - sufficient to cover a large water body. In fact, for film forming compositions as low as 5 wt% silicone polymer, an acceptable spreadability at an acceptable rate was achieved. At the other end of the scale, a blend of 95% silicone polymer and 5% surfactant oil blend was also very effective.

It was also observed that film forming compositions comprising a silicone polymer and a surfactant in a silicone carrier ie. silicone based defoamer did not produce acceptable spreadability.

Suitable surfactants which are suitable for use in the invention are listed below in Table 3

**TABLE 3**

| Active Component | Brand Name |
|---|---|
| Nonylphenol ethoxylate | Teric N9 |
| Octylphenol ethoxylate | Triton X-114 |
| Polyalkylene oxide derivative of a synthetic alcohol | Teric BL8 |
| Tetramethyl decynediol | Surfynol 104H |
| Phosphate ester of an alkyl ethoxylate | Teric 305 |
| Alkyl polysaccharide | Alkadet 15 |
| Alkyl polyglycoside | Terwet 3001 |
| Sodium di(2-ethylhexyl) sulphosuccinate | Silfax T2 |
| Telomer B monoether with polyethylene glcol | Zonyl FSO Fluorosurfactant |
| Mixture of polyalkylenglycols and polyalkoxyesters | Clerol FBA 5074 |
| Modified polyalcoxyester, non ionic. | Clerol FBA5059K |
| Combination of polyalkylene glycols | Foamstop SIN 365 |
| Combination of polyalkylene glycols and esters | Foamstop SIN 365 |
| Di-(ethoxyalkyl) ester of phosphoric acid | Generic |

The list of suitable surfactants is not intended to be exhaustive of surfactants suitable for use in the invention. Other surfactants may be used provided that they are miscible with the mineral or vegetable oil carrier and the resulting surfactant composition is miscible with the silicone polymer used which is preferably PDMS.

Without wishing to be bound by theory, as both silicones and oil/surfactant blends (ie defoamers) have low surface tensions, it is surmised that there is a cumulative benefit when they are blended together, such that the surface tension is reduced even further, thus enabling a very rapid spreading. Alternatively, there may be a chemical repulsion between the silicone molecules and the molecules in the defoamer.

Silicones with lower viscosities, when blended with the defoamer or the defoamer/oil mix, seem to spread more easily than those with higher viscosities. For example, a Dow Corning "200 fluid" polydimethylsiloxane (PDMS) with a viscosity of 50 centistokes (cts) spreads more easily than one with a viscosity of 1000 cts. Silicones with a cts above about 10,000 are not feasible for large water bodies as they are slow to spread and difficult to blend.

The exception is for relatively small-scale water bodies where a viscous product may be beneficial to accommodate a dosing unit. For example, a small dosing unit can be set up to automatically dispense a small amount of the product into the water over say a 3 month period. In this situation, it is desirable to have a viscous product so that the dosing rate is very slow. Even with a relatively high viscosity, the product would normally be able to cover most swimming pools.

One of the benefits of silicones and particularly PDMS is that its viscosity does not vary 10 greatly over the operating temperatures of the composition. This allows reasonably accurate dosing through an automated dosing unit to be set up.

As a refinement, cetyl or stearyl alcohol or cetyl and stearyl acid derivatives can be incorporated into the blend. These derivatives may be alkaline, alkaline earth and other metal salts or esters of stearic acid. These products have been known for many years to reduce evaporation. By themselves, their main disadvantages are that they are difficult to apply (being waxy flakes), they have poor resilience against strong wind or wave action (and hence can build up on one side of a water body), and they degrade very quickly to the extent that they have to be re-applied almost daily. Despite their normally rapid degradation when used in isolation, the applicant has found that they seem to improve and assist the effectiveness and lifespan of the silicone blends (as described above) to some extent. When melted into the blend at a level of say up to 5 wt%, but preferably up to 2 wt%, they also improve the stability of the blend ie they minimise the physical separation of the product into its components. This is advantageous if the product is to be applied through a dosing unit, where it must be homogeneous.

In addition to being easily spread, it is desirable that the film formed has effective evaporation control. In order to test evaporation control, square containers 600 mm x 600 mm were part-filled with water, and 0.2 ml of each formulation was applied by pipette. The drop or decrease in the water level was measured over a 10 day period, and was compared with the drop in a control container. The results of various silicone/surfactant/oil blends are shown in Table 4.

**TABLE 4**

| Formation weight percentages | | | | | Evaporation reduction |
|---|---|---|---|---|---|
| Silicone 200 Fluid (50 cts) | Mineral oil | Vegetable oil (Canola) | Surfactant/oil (Sil D850) | TOTAL | % |
| 95 | | | 5 | 100 | 65 |
| 90 | | | 10 | 100 | 67 |
| 70 | | | 30 | 100 | 71 |
| 5 | 90 | | 5 | 100 | 55 |
| 5 | | 90 | 5 | 100 | 52 |

It can be seen that the use of a film forming composition according to the invention provides an improvement (ie reduction) in the evaporation rate.

### Mosquito Control

The applicant has also observed that the film disrupts the mosquito lifecycle. Female mosquitoes normally lay their eggs on the surface of the water, and the eggs hatch into larvae a few days later. The silicone-based film can potentially impact on this cycle in three ways:
- as silicones have a very low surface tension (about half of the surface tension of water), the eggs have difficulty suspending on the surface
- the silicone forms a physical barrier on the surface, making it difficult for the larvae to breathe once they are hatched
- a repellent such as citronella oil or eucalyptus oil can be incorporated into the blend, thereby further discouraging the mosquitoes.

### Odour Control

The silicone-based film may also be blended with other components to assist in odour reduction. For example, the applicant has found that the formulation is compatible with terpenes, which are commonly used to absorb or mask odours. In laboratory trials, we have observed a reduction in odour when terpenes are blended into the silicone-based film.

## Claims

1. A method for protecting the surface of a liquid comprising the step of:
applying a film forming composition to the liquid surface at a rate of 0.3 to 90 g/m², wherein the film forming composition having a viscosity from 5·10⁻⁵ to 10⁻³ m²s⁻¹ (50 to 1000 centistokes) at the ambient temperature comprises
5 to 95 wt% silicone polymer being a polyorganosiloxane being a polymer of dimethylsiloxane;
5 to 75 wt% of carrier material, wherein the carrier material is mineral oil and/or vegetable oil; and
0.2 to 20 wt% surfactant,
the film forming a substantially continuous protective film across the surface of the liquid.

2. The method of claim 1, wherein the composition is a liquid composition.

3. The method of claim 1, wherein the surfactant is present in an amount of 0.5 to 20 wt%.

4. The method of any one of claims 1 to 3, wherein the surfactant and the carrier material are mixed prior to forming the film forming composition with the silicone polymer.

5. The method according to claim 1, wherein the continuous protective film protects the liquid/gas interface from insect infestations.

6. The method according to claim 1, wherein the composition is applied to the surface at a rate of between 0.3 to 50 g/m².

## Patentansprüche

1. Verfahren zum Schützen der Oberfläche einer Flüssigkeit, welches den folgenden Schritt umfasst:
das Aufbringen einer filmbildenden Zusammensetzung auf die Flüssigkeitsoberfläche mit einer Rate von 0,3 bis 90 g/m², wobei die filmbildende Zusammensetzung bei Raumtemperatur eine Viskosität von 5·10⁻⁵ bis 20⁻³ m²s⁻¹ (50 bis 1000 Centistoke) aufweist und Folgendes umfasst:
5 bis 95 Gew.-% Silikonpolymer, bei dem es sich um ein Polyorganosiloxan handelt, bei dem es sich um ein Polymer von Dimethylsiloxan handelt,
5 bis 75 Gew.-% Trägermaterial, wobei es sich bei dem Trägermaterial um Mineralöl und/oder Pflanzenöl handelt, und
0,2 bis 20 Gew.-% Tensid,
wobei der Film einen im Wesentlichen kontinuierlichen Schutzfilm über die Oberfläche der Flüssigkeit bildet.

2. Verfahren nach Anspruch 1, wobei es sich bei der Zusammensetzung um eine flüssige Zusammensetzung handelt.

3. Verfahren nach Anspruch 1, wobei das Tensid in einer Menge von 0,5 bis 20 Gew.-% vorliegt.

4. Verfahren nach einem der Ansprüche 1 bis 3, wobei das Tensid und das Trägermaterial vor dem Bilden der filmbildenden Zusammensetzung mit dem Silikonpolymer gemischt werden.

5. Verfahren nach Anspruch 1, wobei der kontinuierliche Schutzfilm die Grenzfläche zwischen Flüssigkeit und Gas gegen Insektenbefall schützt.

6. Verfahren nach Anspruch 1, wobei die Zusammensetzung in einer Rate von 0,3 bis 50 g/m² auf die Oberfläche aufgebracht wird.

## Revendications

1. Procédé pour la protection de la surface d'un liquide comprenant l'étape d'application d'une composition filmogène à la surface liquide à une vitesse de 0,3 à 90 g/m², dans laquelle la composition filmogène possédant une viscosité de 5.10⁻⁵ à 10⁻³ m²s⁻¹ (50 à 1000 centistokes) à la température ambiante comprend
5 à 95 % en poids d'un polymère de silicone qui est un polyorganosiloxane qui est un polymère de diméthylsiloxane ;
5 à 75 % en poids d'un matériau de support, le matériau de support étant une huile minérale et/ou une huile végétale ; et
0,2 à 20 % en poids de tensioactif,
le film formant un film protecteur sensiblement continu sur la surface du liquide.

2. Procédé selon la revendication 1, la composition étant une composition liquide.

3. Procédé selon la revendication 1, le tensioactif étant présent en une quantité de 0,5 à 20 % en poids.

4. Procédé selon l'une quelconque des revendications 1 à 3, le tensioactif et le matériau de support étant mélangés avant de former la composition filmogène avec le polymère de silicone.

5. Procédé selon la revendication 1, le film protecteur continu protégeant l'interface liquide/gaz contre des infestations par des insectes.

6. Procédé selon la revendication 1, la composition étant appliquée à la surface à une vitesse comprise entre 0,3 et 50 g/m².
